# EUROPÄISCHE PATENTSCHRIFT

(11) **EP 1 323 725 B1**
(45) Veröffentlichungstag und Bekanntmachung des Hinweises auf die Patenterteilung: **18.01.2006**
(21) Anmeldenummer: 02028775.1
(22) Anmeldetag: 23.12.2002
(51) Int. Cl.: C07F 15/06

(54) **Verfahren zur Herstellung von 1-Methoxy-2-propanol**
Process for the preparation of 1-methoxy-2-propanol
Procédé de préparation du 1-méthoxy-2-propanol

(30) Priorität: 28.12.2001 DE 10164348
(43) Veröffentlichungstag der Anmeldung: 02.07.2003
(73) Patentinhaber: BASF Aktiengesellschaft, 67056 Ludwigshafen (DE)
(72) Erfinder: Teles, Joaquim Henrique, 67166 Otterstadt (DE)
(74) Vertreter: Isenbruck, Günter

(56) Entgegenhaltungen:
- WO-A-00/09463
- WO-A-01/47865
- WO-A-01/89690
- WO-A-96/28402
- WO-A-02/085516
- JP-A- 2000 063 314
- US-A- 5 266 283
- US-A- 5 637 739
- US-A- 5 929 232
- US-B1- 6 262 278
- JACOBSEN ET AL.: TETRAHEDRON LETTERS, Bd. 38, Nr. 5, 1997, Seiten 773-776, XP002230690
- PADDOCK, ROBERT L. ET AL: "Chemical CO2 Fixation: Cr(III) Salen Complexes as Highly Efficient Catalysts for the Coupling of CO2 and Epoxides" JOURNAL OF THE AMERICAN CHEMICAL SOCIETY (2001), 123(46), 11498-11499, XP002230691

## Beschreibung

Die vorliegende Erfindung betrifft ein Verfahren zur selektiven Herstellung von 1-Methoxy-2-propanol durch Umsetzung von Propylenoxid (PO) mit Methanol in Gegenwart eines neuartigen Katalysator-Systems, sowie dieses Katalysatorsystems an sich.

Eines der wichtigen Folgeprodukte von Propylenoxid stellt das 1-Methoxy-2-propanol dar. Dieses wird sowohl als Lösungsmittel als auch als Ausgangsprodukt für zahlreiche Herstellungsverfahren verwendet.

Bisher wurde 1-Methoxy-2-propanol großtechnisch durch Addition von Methanol, das in großem Überschuss eingesetzt wird, an Propylenoxid unter Verwendung von NaOH als Katalysator hergestellt. Dabei entsteht ein Gemisch aus dem gewünschten 1-Methoxy-2-propanol (90%) und jeweils 5% 2-Methoxy-1-propanol und Dipropylenglykolmonomethylether als Isomerengemisch. Problematisch bei dieser, mit vergleichsweise dennoch hoher Selektivität ablaufenden Reaktion ist die Tatsache, dass man ausschließlich, d.h. zu 100%, 1-Methoxy-2-propanol erhalten möchte. Dies liegt u.a. darin, dass 2-Methoxy-1-propanol als teratogen eingestuft ist. Somit lässt sich verkaufs- und weiterverarbeitungsfähiges, spezifikationsgerechtes 1-Methoxy-propanol-2 lediglich unter sehr großem Destillationsaufwand zur Entfernung der unerwünschten Nebenprodukte herstellen. Die dabei erhaltenen Nebenprodukte müssen dann noch aufwendig entsorgt werden.

Jacobsen et al. beschreiben in J. Am. Chem. Soc. (2001), *123*, 2687-2688 die Verwendung von oligomeren, enantiomerenreinen Salen-Co-Katalysatoren zur asymmetrischen Ringöffnung von Epoxiden. Unter anderem wird dort die enantioselektive Synthese von enantiomerenreinem 2-Methoxy-1-hexanol durch Umsetzung von Hexen-1-epoxid mit Methanol beschrieben. Weitere derartige enantiomerenreinen Salen-Katalysatoren sind in der WO 00/09463 ausführlich beschrieben, wobei sich diese Patentanmeldung ausschließlich auf enantioselektive. Synthesen unter Verwendung derartiger Katalysatoren bezieht.

In Anbetracht dieses Standes der Technik lag der vorliegenden Erfindung die Aufgabe zugrunde, ein verbessertes Verfahren zur Herstellung von racemischem 1-Methoxy-2-propanol ausgehend von Propylenoxid bereit zu stellen.

Diese und weitere Aufgaben werden erfüllt durch ein Verfahren zur selektiven Herstellung von racemischem 1-Methoxypropanol-2 durch Umsetzung von Propylenoxyd mit Methanol, wobei die Umsetzung in Gegenwart eines racemischen Katalysators durchgeführt wird, der einen mit einem Metallatom komplexierten asymmetrischen vierzähnigen (tetradentaten) Liganden aufweist, und wobei der Komplex eine annähernd planare Koordinationsgeometrie aufweist.

Bezüglich der erfindungsgemäß einsetzbaren Katalysatoren gibt es keinerlei Beschränkungen, sofern sie die oben genannten Bedingungen erfüllen, d.h. einen vierzähnigen Ligand mit den oben näher spezifizierten Eigenschaften aufweisen. Somit sind im Rahmen der vorliegenden Erfindung insbesondere die in der WO 00/09463 offenbarten Verbindungen als Katalysatoren einsetzbar, wobei im Gegensatz zur WO 00/09463 innerhalb der vorliegenden Erfindung racemische Verbindungen als Katalysatoren eingesetzt werden. So erfolgt auch die Herstellung dieser Verbindungen im wesentlichen analog zur obigen Internationalen Patentanmeldung, wobei jedoch anstelle der dort eingesetzten chiralen Reagenzien Racemate derselben verwendet werden.

Bevorzugt werden im Rahmen der vorliegenden Erfindungen eine oder mehrere der folgenden Katalysatoren mit den allgemeinen Formeln (A) bis (D) eingesetzt.

Katalysatoren mit folgender allgemeiner Formel (A): 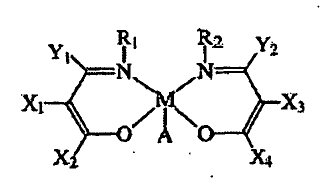
worin
die Substituenten R₁, R₂, Y₁, Y₂, X₁, X₂, X₃ und X₄, jeweils unabhängig voneinander, eine der folgenden Gruppen oder Atome darstellen :
Wasserstoff, Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester und -(CH₂)ₘ-R₇, und wobei eine oder mehrere der oben genannten Substituenten zusammen einen carbocyclischen oder heterocyclischen Ring mit 4 bis 8 Atomen im Ring bilden können, mit der Maßgabe, dass zur Bildung von beta-Iminocarbonylen als vierzähnigen Liganden, mindestens eines der R₁, Y₁, X₁ und X₂ kovalent gebunden ist an mindestens eines der R₂, Y₂, X₃ und X₄, und wobei mindestens eines der Y₁ und Y₂ Wasserstoff ist;
R₇ eine Aryl-, Cycloakyl-, Cycloalkenyl-Gruppe, eine heterocyclische oder eine polycyclische Gruppe darstellt;
m eine ganze Zahl im Bereich von 0 bis 8 ist;
M das Metallatom darstellt;
A ein Gegenion oder ein Nucleophil darstellt; und
der Katalysator als racemisches Gemisch vorliegt.

Katalysatoren mit folgender allgemeiner Formel (B): 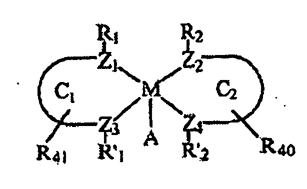
worin
Z₁, Z₂, Z₃ und Z₄ jeweils unabhängig voneinander eine Lewis-Base darstellen;
der C₁-Rest, betrachtet als Kombination aus Z₁, Z₃ und M, sowie der C₂-Rest, betrachtet als Kombination aus Z₂, Z₄ und M, jeweils unabhängig voneinander einen Heterocyclus bilden;
R₁, R₂, R'₁ und R'₂, jeweils unabhängig voneinander, entweder fehlen oder eine kovalente Substitution mit einem organischen oder anorganischen Substituenten, jeweils entsprechend der Wertigkeit des Elektronen abgebenden Atoms, an welchem sie gebunden sind, darstellen;
R₄₀ und R₄₁, jeweils unabhängig voneinander, entweder fehlen oder eine oder mehrere kovalente Substitutionen von C₁ und C₂ mit einem organischen oder anorganischen Substituenten, entsprechend der Wertigkeit des Ringatoms, an welches sie gebunden sind, darstellen, oder zwei oder mehr der R₁, R₂, R'₁, R'₂, R₄₀ und R₄₁ zusammen einen verbrückenden Substituenten bilden;
mit der Maßgabe, dass C₁ an mindestens einer Stelle durch R₁, R'₁ oder R₄₁ substituiert ist, und C₂ an mindestens einer Stelle durch R₂, R'₂ oder R₄₀ substituiert ist, und mindestens eines der R₁, R'₁ und R₄₁ zusammen mit mindestens einem der R₂, R'₂ und R₄₀ einen verbrückenden Substituenten bilden, wobei Z₁, Z₂, Z₃ und Z₄ als vierzähniger Ligand vorliegen;
M ein Metallatom darstellt,
A ein Gegenion oder ein Nucleophil darstellt; und
der Katalysator als racemisches Gemisch vorliegt.

Katalysatoren mit folgender allgemeiner Formel (C): 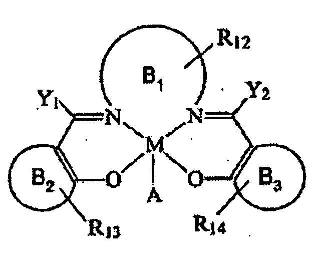
worin
der B₁-Rest einen verbrückenden Substituenten vom Diimin-Typ, dargestellt durch -R₁₅₋R₁₆-R₁₇, ist, wobei R₁₅ und R₁₇, jeweils unabhängig voneinander, fehlen oder eine Alkyl-, Alkenyl- oder Akinyl-Gruppe darstellen und R₁₆ entweder fehlt oder eine Amin-, Imin-, Amid-, Phosphoryl-, Carbonyl-, Silyl-, Sauerstoff-, Schwefel-, Sulfonyl-, Selen-, oder eine Ester-Gruppe bzw. Atom darstellt;
B₂ und B₃, jeweils unabhängig voneinander, Ringe darstellen, die ausgewählt werden unter Cycloalkyl-, Cycloalkenyl-, Aryl- und heterocyclischen Ringen, wobei die Ringe 4 bis 8 Atome im Ring aufweisen,
Y₁ und Y₂, jeweils unabhängig voneinander, Wasserstoff, Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester oder -(CH₂)ₘ-R₇-Gruppen bzw. Atome darstellen;
R₁₂, R₁₃ und R₁₄, jeweils unabhängig voneinander, fehlen oder eine oder mehrere kovalente Substitutionen von B₁, B₂ und B₃ mit Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester und -(CH₂)ₘ-R₇-Gruppen bzw. Atome darstellen, worin R₁₂ an einer oder mehreren Positionen von R₁₅R₁₆R₁₇ auftreten kann,
oder zwei oder mehr der Gruppen R₁₂, R₁₃, R₁₄, Y₁ und Y₂ zusammen einen verbrückenden Substituenten bilden;
R₇ eine Aryl-, Cycloalkyl-, Cycloalkenyl-Gruppe, eine heterocyclische oder eine polycyclische Gruppe darstellt;
m eine ganze Zahl im Bereich von 0 bis 8 ist;
M das Metallatom darstellt;
A ein Gegenion oder ein Nucleophil darstellt; und
der Katalysator als racemisches Gemisch vorliegt.

Katalysatoren mit folgender allgemeiner Formel (D): 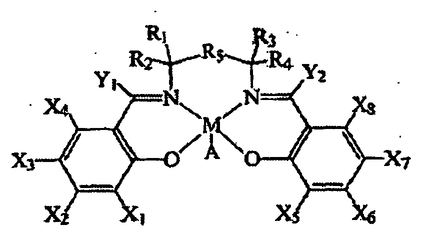
worin
jeder der Substituenten R₁, R₂, R₃, R₄, R₅, Y₁, Y₂, X₁, X₂, X₃, X₄, X₅, X₆, X₇ und X₈, jeweils unabhängig voneinander, Wasserstoff, Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester und -(CH₂)ₘ-R₇-Gruppe bzw. Atom darstellt;
oder zwei oder mehr der Substituenten zusammen einen Carbocyclus oder Heterozyklus mit 4 bis 10 Atomen im Ring bilden;
R₇ eine Aryl-, Cycloalkyl-, Cycloalkenyl-Gruppe, eine heterocyclische oder eine polycyclische Gruppe darstellt;
m eine ganze Zahl im Bereich von 0 bis 8 ist;
M das Metallatom darstellt;
A ein Gegenion oder ein Nucleophil darstellt;
wobei, sofern R₅ fehlt, mindestens eines der R₁ und R₂ zusammen mit mindestens einem der R₃ und R₄ einen verbrückenden Substituenten bildet; und wobei
der Katalysator als racemisches Gemisch vorliegt.

Darüber hinaus können anstelle der oben beschriebenen Verbindungen der allgemeinen Formeln (A) bis (D) auch Oligomere derartiger Verbindungen eingesetzt werden, wobei die Anzahl der Wiederholungseinheiten 2 bis 20, vorzugsweise 2 bis 10 und insbesondere 2 bis 6 beträgt.

Die Herstellung sowie bevorzugte Ausführungsformen der oben genannten Katalysatoren sind in der WO 00/09463 sowie dem eingangs erwähnten Artikel von Jacobsen aus J. Am. Chem. Soc., 2001, *123*, 2687-2688 beschrieben. Somit wird bezüglich weiterer Details der im Rahmen des vorliegenden Verfahrens einsetzbaren Katalysatoren auf diese beiden Druckschriften verwiesen.

Bezüglich der innerhalb der Katalysatoren eingesetzten Metallatome können alle Übergangsmetalle (d.h. Metalle mit d-Elektronen) eingesetzt werden. Vorzugsweise werden Übergangsmetalle der Gruppen 5 bis 12 eingesetzt, die koordinativ ungesättigt sind und nicht in ihrem höchsten Oxidationszustand vorliegen. Besonders geeignete Metalle schließen Cr, Mn, V, Fe, Co, Mo, W, Ru und Ni ein. Besonders bevorzugt sind Metalle der Gruppe VI, ganz besonders bevorzugt Cr (III) und Co (III).

Co (II) kann auch eingesetzt werden, wenn die Reaktionsbedingungen so gewählt werden, dass es in situ zu Co (III) oxidiert wird (z. B. in Anwesenheit von O₂ oder anderen geeigneten Oxidationsmitteln, inklusive elektrochemische Oxidation).

Bzgl. der im Rahmen der vorliegenden Erfindung einsetzbaren Nucleophile A sei an dieser Stelle nochmals auf die WO 00/09463, insbesondere Seiten 55/56 verwiesen. Im Rahmen der vorliegenden Erfindung werden vorzugsweise Nucleophile mit Sauerstoffatomen, weiter bevorzugt Carboxylate und insbesondere Acetat eingesetzt.

Die Menge des Katalysators liegt im allgemeinen in einem Bereich von weniger als 25 mol%. Die Produkte werden anschließend durch Destillation abgetrennt und der Katalysator zurückgeführt.

Die Umsetzung des Katalysators kann entweder ohne Lösungsmittel oder in Gegenwart eines fluiden Mediums als Lösungs- oder Verdünnungsmittel durchgeführt werden. Geeignete Lösungsmittel können unter Ethem, Nitrilen, halogenierten Lösungsmitteln, aliphatischen oder aromatischen Kohlenwasserstoffen, Estern, sekundären und tertiären Alkoholen, und Ketonen, polaren aprotischen Lösungsmitteln sowie unter Kombinationen aus zwei oder mehr davon ausgewählt werden. Es wird bevorzugt, die Umsetzung ohne Lösungsmittel (d.h. im Gemisch aus MeOH und PO) durchzuführen. Das Verhältnis MeOH : PO wird dabei im Bereich 0,5 mol/mol - 5 mol/mol gewählt (bevorzugter Bereich: 0,8 - 2 mol/mol, insbesondere 0,9 - 1,5 mol/mol).

Ebenso ist es möglich, das Verfahren in einem Flüssigen Medium, des verschieden von Propylenoxid und Methanol ist, durchzuführen.

Die Umsetzung erfolgt in der Regel bei moderaten Temperaturen, d.h. im Bereich von -20 °C bis 120 °C, weiter bevorzugt von 0°C bis 120°C, weiter bevorzugt von 0°C bis 60 °C.

Weitere Details bezüglich der im Rahmen der vorliegenden Erfindung gut einsetzbaren Lösungsmittel sowie der Temperatur, bei der die Umsetzung durchgeführt wird, sind der WO 00/09463, dort insbesondere S. 55/56 zu entnehmen.

Dabei kann im Rahmen der vorliegenden Erfindung die Umsetzung kontinuierlich oder im Batch-Mode durchgeführt werden. Es kann in einem oder mehreren Reaktoren bzw. Reaktionszonen gearbeitet werden. Der Katalysator kann entweder als solcher homogen eingesetzt werden oder als Suspension. Ferner kann der Katalysator auch in auf einer Matrix immobilisierter Form eingesetzt werden.

Bezüglich des im Rahmen der vorliegenden Erfindung als Edukt eingesetzten Propylenoxids existieren ebenfalls keine besonderen Beschränkungen. Insbesondere bevorzugt wird ein Propylenoxid eingesetzt, das unter Verwendung eines Zeolith-Katalysators, insbesondere eines Zeolith-Katalysators vom TS-1-Typ erhalten wird. Die Herstellung von Propylenoxid unter Verwendung eines derartigen Katalysators ist u.a. in der EP-A 0 100 119 sowie den Anmeldungen der Anmelderin; wie z.B. der DE-A 10001401.1, DE-A 198 35 907, DE-A 199 36 547, DE-A 100 15 246.5, DE-A 10032884.9, DE-A 10105527.7, DE-A 19847629.9 und der DE-A 100 32 885.7 und dem darin jeweils weiteren zitierten Stand der Technik beschrieben.

Darüberhinaus betrifft die vorliegende Erfindung auch neue racemische Gemische von im Rahmen der vorliegenden Erfindung gut einsetzbaren katalytisch aktiven Verbindungen, die insbesondere dadurch charakterisiert sind, dass sie tetradentate Liganden aufweisen, die an bestimmten, nachstehend näher definierten Positionen mit Mono-, Oligo- oder Polyisobutylengruppen substituiert sind.

Somit betrifft die vorliegende Erfindung auch racemische Gemische von mindestens einer Verbindung mit folgender allgemeiner Formel (A'): 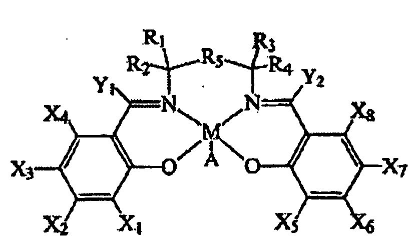
worin
die Substituenten R₁, R₂, R₃, R₄, R₅, Y₁, Y₂ jeweils unabhängig voneinander Wasserstoff, Halogen, Alkyl, Alkenyl, Alkinyl, Hydroxyl, Amino, Nitro, Diol, Amin, Imin, Amid, Phosphoryl, Phosphonant, Phosphin, Carbonyl, Carboxyl, Silyl, Ether, Thioether, Sulfonyl, Selenoether, Keton, Aldehyd, Ester und -(CH₂)ₘ-R₇-Gruppe bzw. Atom darstellen;
oder zwei oder mehr der Substituenten zusammen einen Carbocyclus oder Heterocyclus mit 4 bis 10 Atomen im Ring bilden;
R₇ eine Aryl-, Cycloalkyl-, Cycloalkenyl-Gruppe, eine heterocyclische oder eine polycyclische Gruppe darstellt;
m eine ganze Zahl im Bereich von 0 bis 8 ist;
M das Metallatom darstellt;
A ein Gegenion oder ein Nucleophil darstellt;
wobei, sofern R₅ fehlt, mindestens eines der R₁ und R₂ zusammen mit mindestens einem der R₃ und R₄ einen verbrückenden Substituenten bildet;
X₂, X₄, X₆ und X₈ für Wasserstoff stehen und X₁, X₃, X₅ und X₇ unabhängig voneinander für Oligo- bzw. Polyisobutylenreste mit jeweils 2 bis 1000 Isobutylen einheiten stehen.

Racemisches Gemisch, das mindestens eine der folgenden Verbindungen (A'3) oder (A'4) enthält:

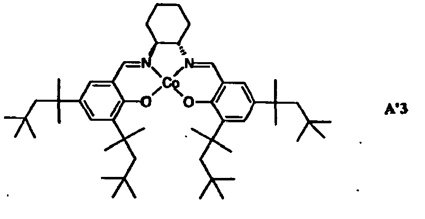

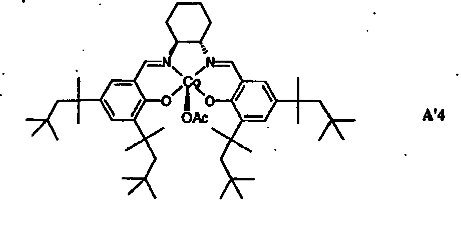

### Beispiele

### Beispiel 1

### Herstellung von Rac-1,2-bis(3,5-di-tert-butylsalicylamino)cyclohexan (Salen 1)

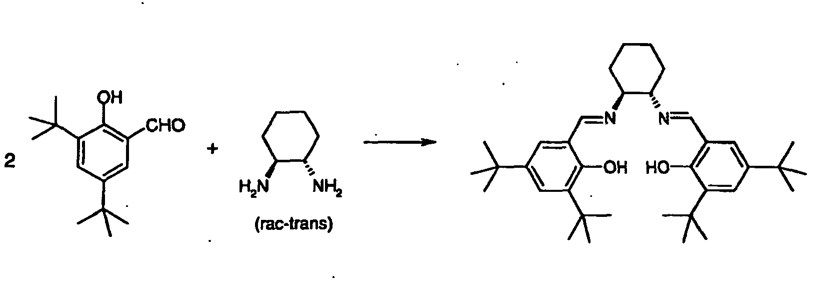

Rac-trans-1,2-diaminocyclohexan (6,09 g, 53 mmol) wurde in 300 ml Ethanol gelöst und in einem Dreihalskolben mit mechanischem Rührer vorgelegt. Dazu wurde dann 3,5-Ditert-butylsalicylaldehyd (25,0 g, 107 mmol) zugegeben. Das Gemisch wurde daraufhin eine Stunde am Rückfluss erhitzt, wobei eine rote Suspension entstand. Nach dem Abkühlen wurden ca. 100 ml Wasser unter Rühren zugetropft. Der gebildete Niederschlag wurde abfiltriert und mit einer kleinen Portion 95%igem Ethanol gewaschen, woraus man 29,8 g Rohprodukt erhielt. Zur Reinigung wurde dieses einmal aus 350 ml Ethanol umkristallisiert. Man erhielt 27,18 g reines Produkt als gelbes Pulver. Die Ausbeute betrug 94%.

Das Produkt hatte einen Schmelzpunkt von 183°C und zeigte eine korrekte Elementaranalyse und ¹³C- bzw. ¹H-NMR Daten.

### Beispiel 2

### Herstellung des Co(II)-Komplexes von Salen 1

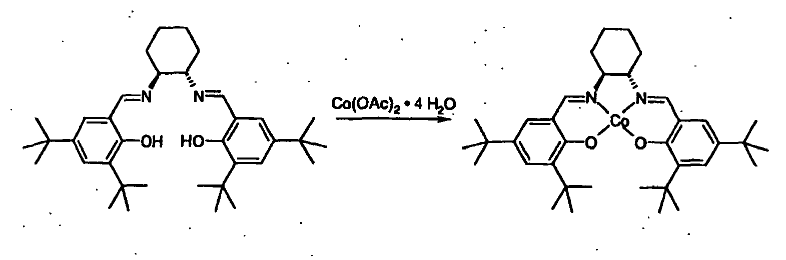

Das Salen **1** aus Beispiel 1 (27,13 g, 50 mmol) wurde in Toluol (140 g) gelöst und mit einem leichten N₂-Strom von gelöstem Sauerstoff befreit. Dazu wurde dann eine ebenfalls O₂-freie Lösung von Cobalt(II)acetat-tetrahydrat (14,84 g, 59,6 mmol) in Methanol (530 ml) zugegeben und das Gemisch eine Stunde bei Raumtemperatur unter N₂ gerührt. Der gebildete Niederschlag wurde abfiltriert und mit einer kleinen Portion Methanol gewaschen. Man erhielt 23,46 g des Cobalt(II)salen-Komplexes als roten Feststoff (dieser Feststoff kann problemlos in einer dicht verschlossenen Flasche ohne besondere Inertisierung aufbewahrt werden). Die Ausbeute betrug 78%.
Das Produkt zeigte eine korrekte Elementaranalyse. Schmelzpunkt: 183°C.

### Beispiel 3

### Herstellung des Co(III)acetato-Komplexes von Salen 1

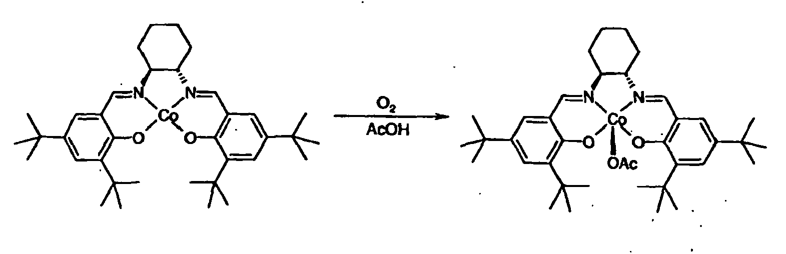

Der Cobalt(II)-Komplex des Salen 1 aus Beispiel 2 (1,2 g, 2,2 mmol) wurde in Toluol (15 mml) gelöst. Dazu wurde Essigsäure (0,12 ml) zugegeben und das Gemisch ca. 10 Minuten an der Luft gerührt, wobei die Lösung von rot ins Braune umschlug. Die Lösung wurde dann am Rotationsverdampfer eingeengt und der Rückstand über Nacht im Vakuum bei Raumtemperatur getrocknet. Das Rohprodukt (1,62 g, enthält noch kleine Mengen Toluol) kann ohne weitere Reinigung als Katalysator eingesetzt werden.

### Beispiel 4a

### Addition von Methanol an Propylenoxid mit Co(III)acetato-Komplex von Salen 1 als Katalysator (ohne Lösungsmittel)

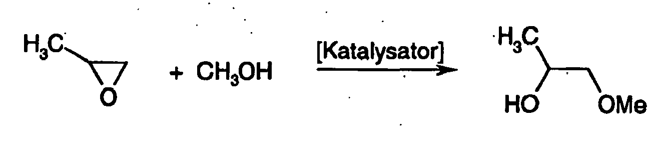

Das Rohprodukt aus Beispiel 3 wurde in ein Gemisch aus Propylenoxid (29,0 g, 0,5 mol) und Methanol (16,0 g, 0,5 mol) suspendiert und diese Suspension 10 Tage bei Raumtemperatur gerührt. Die Produktlösung enthielt neben unumgesetztem Propylenoxid und Methanol nur 1-Methoxy-2-propanol (ca. 8 Gew.-%) und Spuren von 2-Methoxy-1-propanol. Die Selektivität zu 1-Methoxy-2-propanol betrug 98,2%.

### Beispiel 4b

### Addition von Methanol an Propylenoxid mit Co(III)acetato-Komplex von Salen 1 als Katalysator (mit Lösungsmittel)

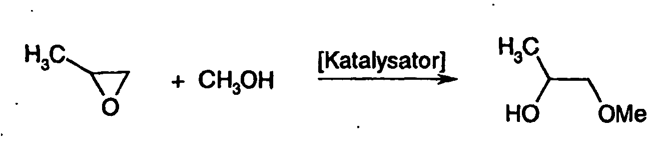

Das Rohprodukt aus Beispiel 3 wurde in ein Gemisch aus Propylenoxid (29,0 g, 0,5 mol), Methanol (16,0 g, 0,5 mol) und Acetonitril (20 ml) suspendiert und diese Suspension 14 Tage bei Raumtemperatur gerührt. Die Produktlösung enthielt neben unumgesetztem Propylenoxid und Methanol nur 1-Methoxy-2-propanol (ca. 12,5 Gew.-%) und Spuren von 2-Methoxy-1-propanol. Die Selektivität zu 1-Methoxy-2-propanol betrug 98,1%.

### Beispiel 5

### Herstellung von 3,5-bis(1,1,3,3-Tetramethylbutyl)salicylaldehyd

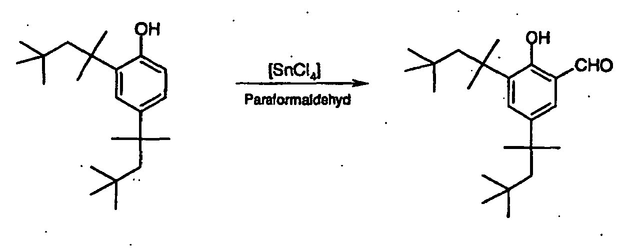

2,4-bis(1,1,3,3-Tetramethylbutyl)phenol (26,2 g, 82,4 mmol, synthetisiert nach der in der US 3,373,210 beschriebene Methode), Toluol (200 ml) und 2,6-Lutidin (14,4 g, 135 mmol) wurden in einen mit Stickstoff inertisierten Rührkolben vorgelegt und auf 0°C gekühlt. Dazu wurde dann SnCl₄ (8,57 g, 33 mmol) vorsichtig zugegeben. Das Gemisch wurde anschließend 20 Minuten bei Raumtemperatur gerührt, bevor man Paraformaldehyd (15,1 g, 502 mmol) zugab. Danach wurde das Gemisch 12 Stunden bei 100°C gerührt. Nach dem Abkühlen wurde Salzsäure (1 M, 272 ml) zugegeben. Die entstandene Suspension wurde über Celite filtriert und der Feststoff mit 100 ml Ethylacetat gewaschen. Die organische Phase des Filtrats wurde dann abgetrennt, zweimal mit je 100 ml NaCl-Lösung gewaschen, über MgSO₄ getrocknet und im Vakuum eingeengt. Als Produkt bildete sich dabei ein leicht gelbliches Öl. Laut GC/MS enthält dieses Rohprodukt nur ca. 3% Edukt. Ausbeute: 26,9 g (94%).

### Beispiel 6

### Herstellung von Rac-1,2-bis(3,5-dioctylsalicylamine)cyclohexan (Salen 2)

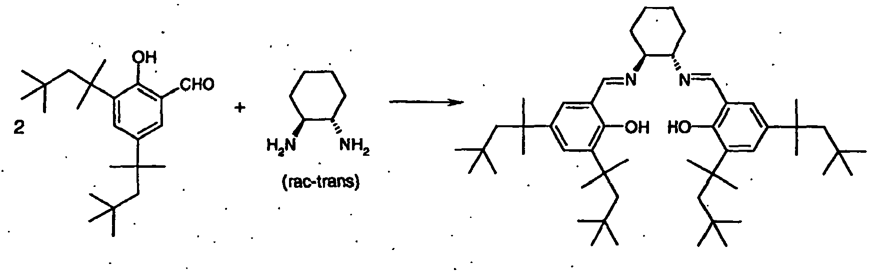

Rac-trans-1,2-Diaminocyclohexan (4,16 g, 36,5 mmol) wurde in 180 ml Ethanol gelöst und in einem Dreihalskolben mit mechanischem Rührer vorgelegt. Dazu wurde dann 3,5-Dioctylsalicylaldehyd (25,7 g, 74,4 mmol, aus Beispiel 5) zugegeben. Danach wurde das Gemisch dann eine Stunde am Rückfluss erhitzt, wobei eine gelbe Suspension entstand. Nach dem Abkühlen wurden ca. 100 ml Wasser unter Rühren zugetropft. Der gebildete Niederschlag wurde abfiltriert, mit einer kleinen Portion eines Ethanol/Wasser-Gemisches (1:1) gewaschen und im Vakuum bei 70°C getrocknet. Als Produkt erhielt man dabei ein gelbes kristallines Pulver. Die Ausbeute betrug 24,5 g (93%).
Das Produkt hatte einen Schmelzpunkt von 172° C und zeigte eine korrekte Elementaranalyse und ¹³C- bzw. ¹H-NMR Daten.

### Beispiel 7

### Herstellung des Co(II)-Komplexes von Salen 2

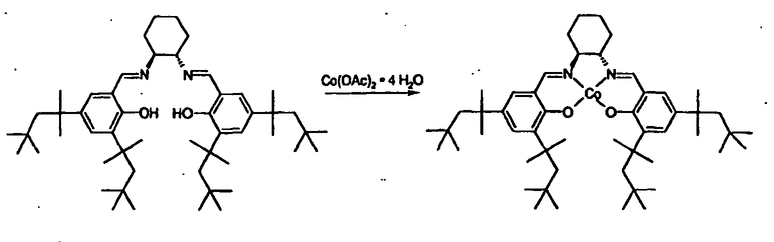

Das Salen **2** aus Beispiel 6 (19,4 g, 27 mmol) wurde in Toluol (100 g) gelöst und mit einem leichten N₂-Strom von gelöstem Sauerstoff befreit. Dazu wurde dann eine ebenfalls O₂-freie Lösung von Cobalt(II)acetat-tetrahydrat (8,01 g, 32,2 mmol) in Methanol (380 ml) zugegeben und das Gemisch eine Stunde bei Raumtemperatur unter N₂ gerührt. Der gebildete Niederschlag wurde abfiltriert und mit einer kleinen Portion Methanol gewaschen. Man erhielt 16,36 g des Cobalt(II)salen-Komplexes als roten Feststoff (dieser Feststoff kann problemlos in einer dicht verschlossenen Flasche ohne besondere Inertisierung aufbewahrt werden). Ausbeute: 78%.
Das Produkt zeigte eine korrekte Elementaranalyse. APCI-MS: 828,7; ber. für [M+H]: 828,6

### Beispiel 8

### Herstellung des Co(III)acetato-Komplexes von Salen 2

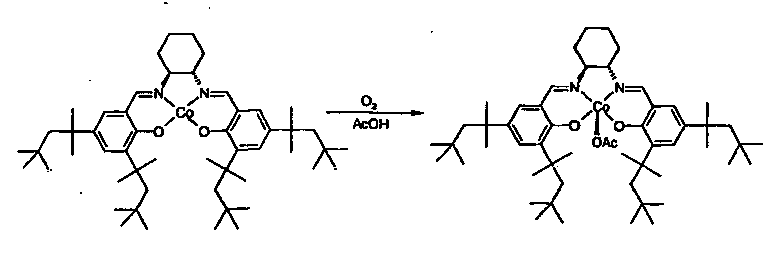

Der Cobalt(II)-Komplex des Salen **2** aus Beispiel 7 (1,7 g, 2,2 mmol) wurde in Toluol (15 ml) gelöst. Dazu wurde Essigsäure (0,12 ml) zugegeben und das Gemisch ca. 10 Minuten an der Luft gerührt, wobei die Lösung von rot ins Braune umschlug. Die Lösung wurde dann am Rotationsverdampfer eingeengt und der Rückstand über Nacht im Vakuum bei Raumtemperatur getrocknet. Das Rohprodukt (1,9 g, enthielt noch kleine Mengen Toluol) kann ohne weitere Reinigung als Katalysator eingesetzt werden.

### Beispiel 9

### Addition von Methanol an Propylenoxid mit Co(M)acetato-Komplex von Salen 2 als Katalysator

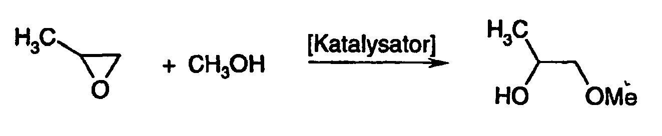

Das Rohprodukt aus Beispiel 8 wurde in ein Gemisch aus Propylenoxid (29,0 g, 0,5 mol) und Methanol (16,0 g, 0,5 mol) suspendiert und diese Suspension 10 Tage bei Raumtemperatur gerührt. Die Produktlösung enthielt neben unumgesetztem Propylenoxid und Methanol nur 1-Methoxy-2-propanol (0,5 Gew.-%) und Spuren von 2-Methoxy-1-propanol. Die Selektivität zu 1-Methoxy-2-propanol betrug >95%.

## Patentansprüche

1. Verfahren zur selektiven Herstellung von 1-Methoxy-2-propanol durch Umsetzung von Propylenoxyd mit Methanol, **dadurch gekennzeichnet, dass** die Umsetzung in Gegenwart eines racemischen Katalysators durchgeführt wird, der einen mit einem Metallatom komplexierten asymmetrischen vierzähnigen (tetradentaten) Liganden aufweist, und wobei der Komplex eine annähernd planare Geometrie aufweist.

2. Verfahren nach Anspruch 1, wobei der Katalysator folgende allgemeine Formel (A) besitzt: 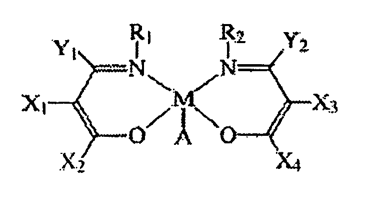
worin
die Substituenten R₁, R₂, Y₁, Y₂, X₁, X₂, X₃ und X₄, jeweils unabhängig voneinander, eine der folgenden Gruppen oder Atome darstellen :
Wasserstoff, Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester und -(CH₂)ₘ-R₇, und wobei eine oder mehrere der oben genannten Substituenten zusammen einen carbocyclischen oder heterocyclischen Ring mit 4 bis 8 Atomen im Ring bilden können,
mit der Maßgabe, dass zur Bildung von β-Iminocarbonylen als vierzähnigen Liganden, mindestens eines der R₁, Y₁, X₁ und X₂ kovalent gebunden ist an mindestens eines der R₂, Y₂, X₃ und X₄, und
wobei mindestens eines der Y₁ und Y₂ Wasserstoff ist;
R₇ eine Aryl-, Cycloakyl-, Cycloalkenyl-Gruppe, eine heterocyclische oder eine polycyclische Gruppe darstellt;
m eine ganze Zahl im Bereich von 0 bis 8 ist;
M das Metallatom darstellt;
A ein Gegenion oder ein Nucleophil darstellt; und
der Katalysator als racemisches Gemisch vorliegt.

3. Verfahren nach Anspruch 1, wobei der Katalysator folgende allgemeine Formel (B) besitzt: 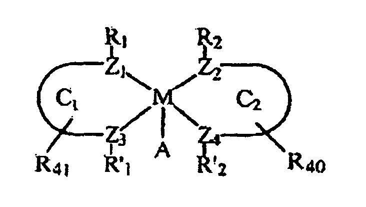
worin
Z₁, Z₂, Z₃ und Z₄ jeweils unabhängig voneinander eine Lewis-Base darstellen;
Der C₁-Rest, betrachtet als Kombination aus Z₁, Z₃ und M, sowie der C₂-Rest, betrachtet als Kombination aus Z₂, Z₄ und M, jeweils unabhängig voneinander einen Heterocyclus bilden;
R₁, R₂, R'₁ und R'₂, jeweils unabhängig voneinander, entweder fehlen oder eine kovalente Substitution mit einem organischen oder anorganischen Substituenten, jeweils entsprechend der Wertigkeit des Elektronen abgebenden Atoms, an welchem sie gebunden sind, darstellen;
R₄₀ und R₄₁, jeweils unabhängig voneinander, entweder fehlen oder eine oder mehrere kovalente Substitutionen von C₁ und C₂ mit einem organischen oder anorganischen Substituenten, der Wertigkeit des Ringatoms, an welches sie gebunden sind, darstellen, oder zwei oder mehr der R₁, R₂, R'₁, R'₂, R₄₀ und R₄₁ zusammen einen verbrückenden Substituenten bilden;
mit der Maßgabe, dass C₁ an mindestens einer Stelle durch R₁, R'₁ oder R₄₁ substituiert ist, und C₂ an mindestens einer Stelle durch R₂, R'₂ oder R₄₀ substituiert ist, und mindestens eines der R₁, R'₁ und R₄₁ zusammen mit mindestens einem der R₂, R'₂ und R₄₀ einen verbrückenden Substituenten bilden, wobei Z₁, Z₂, Z₃ und Z₄ als vierzähniger Ligand vorliegen;
M ein Metallatom darstellt,
A ein Gegenion oder ein Nucleophil darstellt; und
der Katalysator als racemisches Gemisch vorliegt.

4. Verfahren nach Anspruch 1, wobei der Katalysator folgende allgemeine Formel (C) besitzt: 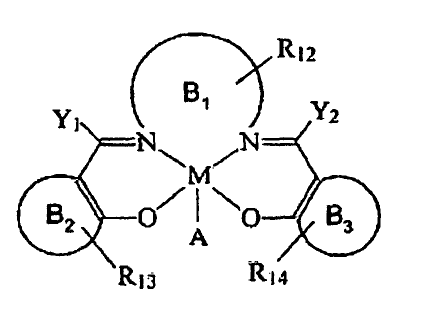
worin
der B₁-Rest einen verbrückenden Substituenten vom Diimin-Typ, dargestellt durch -R₁₅-R₁₆-R₁₇ ist, wobei R₁₅ und R₁₇, jeweils unabhängig voneinander, fehlen oder eine Alkyl-, Alkenyl- oder Akinyl-Gruppe darstellen und R₁₆ entweder fehlt oder eine Amin-, Imin-, Amid-, Phosphoryl-, Carbonyl-, Silyl-, Sauerstoff-, Schwefel-, Sulfonyl-, Selen-, oder eine Ester-Gruppe bzw. Atom darstellt;
B₂ und B₃, jeweils unabhängig voneinander, Ringe darstellen, die ausgewählt werden unter Cycloalkyl-, Cycloalkenyl-, Aryl- und heterocyclischen Ringen, wobei die Ringe 4 bis 8 Atome im Ring aufweisen,
Y₁ und Y₂, jeweils unabhängig voneinander, Wasserstoff, Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester oder -(CH₂)ₘ-R₇-Gruppen bzw. Atome darstellen;
R₁₂, R₁₃ und R₁₄, jeweils unabhängig voneinander, fehlen oder eine oder mehrere kovalente Substitutionen von B₁, B₂ und B₃ mit Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester und -(CH₂)ₘ-R₇-Gruppen bzw. Atome darstellen, worin R₁₂ an einer oder mehreren Positionen von R₁₅-R₁₆-R₁₇ auftreten kann,
oder zwei oder mehr der Gruppen R₁₂, R₁₃, R₁₄, Y₁ und Y₂ zusammen einen verbrückenden Substituenten bilden;
R₇ eine Aryl-, Cycloalkyl-, Cycloalkenyl-Gruppe, eine heterocyclische oder eine polycyclische Gruppe darstellt;
m eine ganze Zahl im Bereich von 0 bis 8 ist;
M das Metallatom darstellt;
A ein Gegenion oder ein Nucleophil darstellt; und
der Katalysator als racemisches Gemisch vorliegt.

5. Verfahren nach Anspruch 1, wobei der Katalysator die folgende allgemeine Formel (D) besitzt: 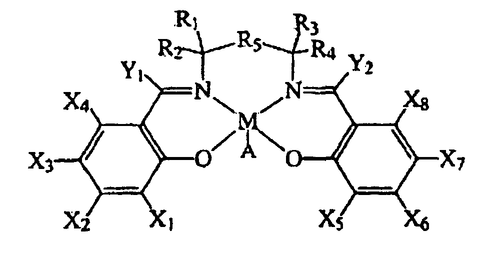
worin
jeder der Substituenten R₁, R₂, R₃, R₄, R₅, Y₁, Y₂, X₁, X₂, X₃, X₄, X₅, X₆, X₇ und X₈, jeweils unabhängig voneinander, Wasserstoff, Halogen, Alkyl, Alkenyl, Alkinyl, Hydroxyl, Amino, Nitro, Diol, Amin, Imin, Amid, Phosphoryl, Phosphonat, Phosphin, Carbonyl, Carboxyl, Silyl, Ether, Thioether, Sulfonyl, Selenoether, Keton, Aldehyd, Ester und -(CH₂)ₘ-R₇-Gruppe bzw. Atom darstellt;
oder zwei oder mehr der Substituenten zusammen einen Carbocyclus oder Heterocyclus mit 4 bis 10 Atomen im Ring bilden;
R₇ eine Aryl-, Cycloalkyl-, Cycloalkenyl-Gruppe, eine heterocyclische oder eine polycyclische Gruppe darstellt;
m eine ganze Zahl im Bereich von 0 bis 8 ist;
M das Metallatom darstellt;
A ein Gegenion oder ein Nucleophil darstellt;
wobei, sofern R₅ fehlt, mindestens eines der R₁ und R₂ zusammen mit mindestens einem der R₃ und R₄ einen verbrückenden Substituenten bildet; und wobei
der Katalysator als racemisches Gemisch vorliegt.

6. Verfahren nach einem der Ansprüche 1 bis 5, wobei der Katalysator als Monomer oder als Oligomer mit 2 bis 20 Wiederholungseinheiten vorliegt.

7. Verfahren nach einem der Ansprüche 1 bis 6, **dadurch gekennzeichnet, dass** es in einem flüssigen Medium, das verschieden von Propylenoxid und Methanol ist, durchgeführt wird.

8. Verfahren nach einem der Ansprüche 1 bis 7, **dadurch gekennzeichnet, dass** es bei einer Temperatur im Bereich von 0 bis 120° C durchgeführt wird.

9. Verfahren nach einem der vorstehenden Ansprüche, **dadurch gekennzeichnet, dass** der Katalysator immobilisiert auf einer Matrix vorliegt.

10. Racemisches Gemisch mindestens einer Verbindung mit folgender allgemeiner Formel (A'): 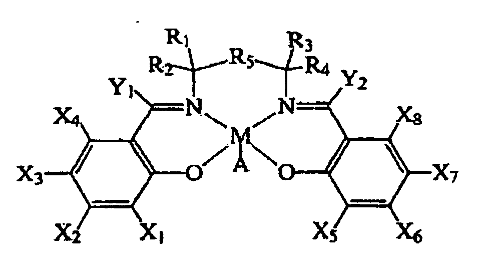
worin
die Substituenten R₁, R₂, R₃, R₄, R₅, Y₁, Y₂, A und M wie in Anspruch 5 definiert sind, X₂, X₄, X₆ und X₈ für Wasserstoff stehen und X₁, X₃, X₅ und X₇ unabhängig voneinander für Oligo- bzw. Polyisobutylenreste mit jeweils 2 bis 1000 Isobutyleneinheiten stehen.

11. Racemisches Gemisch, das mindestens eine der folgenden Verbindungen (A'3) oder (A'4) enthält:

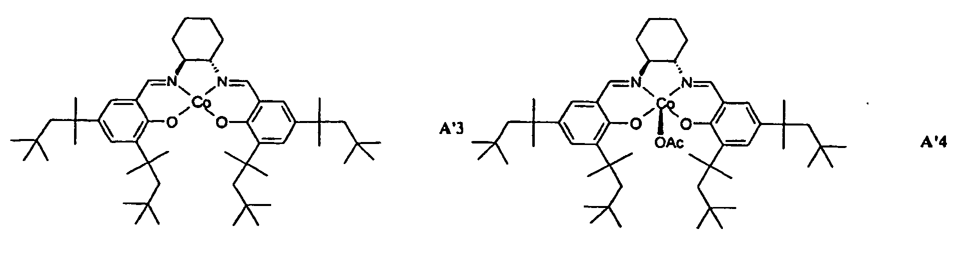

## Claims

1. A process for the selective preparation of 1-methoxy-2-propanol by reacting propylene oxide with methanol in the presence of a racemic catalyst which comprises an asymmetric polydentate (tetradentate) ligand complexed with a metal atom, where the complex has an approximately planar geometry.

2. The process according to claim 1, wherein the catalyst has the following formula (A): 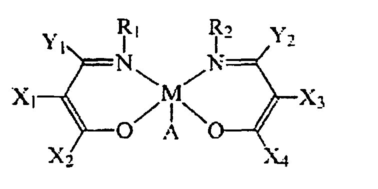
where
the substituents R₁, R₂, Y₁, Y₂, X₁, X₂, X₃ and X₄, are each, independently of one another, one of the following groups or atoms:
hydrogen, halogen, alkyl, alkenyl, alkynyl, hydroxyl, amino, nitro, diol, amine, imine, amide, phosphoryl, phosphonate, phosphine, carbonyl, carboxyl, silyl, ether, thioether, sulfonyl, selenoether, ketone, aldehyde, ester and -(CH₂)ₘ-R₇, where one or more of the abovementioned substituents may together form a carbocyclic or heterocyclic ring having from 4 to 8 atoms in the ring, with the proviso that to form β-iminocarbonyls as tetradentate ligands, at least one of R₁, Y₁, X₁ and X₂ is covalently bound to at least one of R₂, Y₂, X₃ and X₄, and
at least one of Y₁ and Y₂ is hydrogen;
R₇ is an aryl, cycloalkyl or cycloalkenyl group, a heterocyclic group or a polycyclic group;
m is an integer in the range from 0 to 8;
M is the metal atom;
A is a counterion or a nucleophile; and
the catalyst is present as a racemic mixture.

3. The process according to claim 1, wherein the catalyst has the following formula (B): 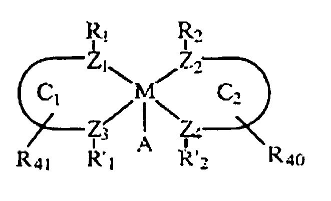
where
Z₁, Z₂, Z₃ and Z₄ are each, independently of one another, a Lewis base;
the C₁ moiety, viewed as a combination of Z₁, Z₃ and M, and the C₂ moiety, viewed as a combination of Z₂, Z₄ and M, in each case form, independently of one another, a heterocycle;
R₁, R₂, R'₁ and R'₂, in each case independently of one another, are either absent or represent a covalently bound organic or inorganic substituent, in each case depending on the valence of the electron-donating atom to which they are bound;
R₄₀ and R₄₁, in each case independently of one another, are either absent or represent one or more covalently bound organic or inorganic substituents on C₁ and C₂, depending on the valence of the ring atom to which they are bound, or two or more of R₁, R₂, R'₁, R'₂, R₄₀ and R₄₁ together form a bridging substituent;
with the proviso that C₁ is substituted in at least one position by R₁, R'₁ or R₄₁ and C₂ is substituted in at least one position by R₂, R'₂ or R₄₀, and at least one of R₁, R'₁ and R₄₁ together with at least one of R₂, R'₂ and R₄₀ form a bridging substituent, where Z₁, Z₂, Z₃ and Z₄ are present as a tetradentate ligand;
M is a metal atom,
A is a counterion or a nucleophile; and
the catalyst is present as a racemic mixture.

4. The process according to claim 1, wherein the catalyst has the following formula (C): 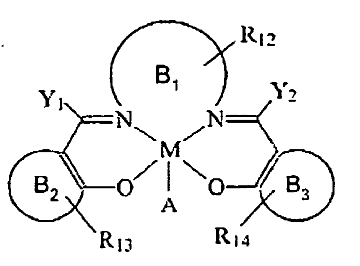
where
the B₁ moiety is a bridging substituent of the diimine type, represented by -R₁₅-R₁₆-R₁₇, where R₁₅ and R₁₇, in each case independently of one another, are absent or represent an alkyl, alkenyl or alkynyl group and R₁₆ is either absent or is an amine, imine, amide, phosphoryl, carbonyl, silyl, oxygen, sulfur, sulfonyl, selenium or ester group or atom;
B₂ and B₃ are each, independently of one another, rings selected from among cycloalkyl, cycloalkenyl, aryl and heterocyclic rings, where the rings have from 4 to 8 atoms in the ring;
Y₁ and Y₂ are each, independently of one another, hydrogen, halogen, alkyl, alkenyl, alkynyl, hydroxyl, amino, nitro, diol, amine, imine, amide, phosphoryl, phosphonate, phosphine, carbonyl, carboxyl, silyl, ether, thioether, sulfonyl, selenoether, ketone, aldehyde, ester or -(CH₂)ₘ-R₇ groups or atoms;
R₁₂, R₁₃ and R₁₄, in each case independently of one another, are absent or represent one or more covalently bound halogen, alkyl, alkenyl, alkynyl, hydroxyl, amino, nitro, diol, amine, imine, amide, phosphoryl, phosphonate, phosphine, carbonyl, carboxyl, silyl, ether, thioether, sulfonyl, selenoether, ketone, aldehyde, ester and -(CH₂)ₘ-R₇ substituents on B₁, B₂ and B₃, where R₁₂ may occur at one or more positions on R₁₅-R₁₆-R₁₇,
or two or more of the groups R₁₂, R₁₃, R₁₄, Y₁ and Y₂ together form a bridging substituent;
R₇ is an aryl, cycloalkyl or cycloalkenyl group, a heterocyclic group or a polycyclic group;
m is an integer in the range from 0 to 8;
M is the metal atom;
A is a counterion or a nucleophile; and
the catalyst is present as a racemic mixture.

5. The process according to claim 1, wherein the catalyst has the following formula (D): 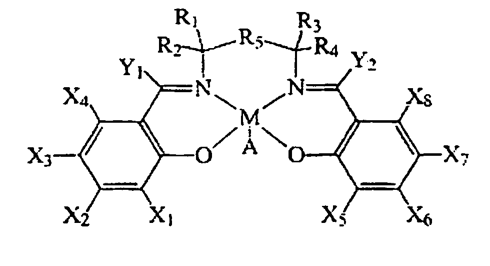
where
the substituents R₁, R₂, R₃, R₄, R₅, Y₁, Y₂, X₁, X₂, X₃, X₄, X₅, X₆, X₇ and X₈ are each, independently of one another, hydrogen, halogen, alkyl, alkenyl, alkynyl, hydroxyl, amino, nitro, diol, amine, imine, amide, phosphoryl, phosphonate, phosphine, carbonyl, carboxyl, silyl, ether, thioether, sulfonyl, selenoether, ketone, aldehyde, ester or -(CH₂)ₘ-R₇ groups or atoms;
or two or more of the substituents together form a carbocycle or heterocycle having from 4 to 10 atoms in the ring;
R₇ is an aryl, cycloalkyl or cycloalkenyl group, a heterocyclic group or a polycyclic group;
m is an integer in the range from 0 to 8;
M is the metal atom;
A is a counterion or a nucleophile;
where, if R₅ is absent, at least one of R₁ and R₂ together with at least one of R₃ and R₄ form a bridging substituent; and
the catalyst is present as a racemic mixture.

6. The process according to any of claims 1 to 5, wherein the catalyst is in the form of the monomer or an oligomer having from 2 to 20 repeating units.

7. The process according to any of claims 1 to 6 carried out in a liquid medium which is different from propylene oxide and methanol.

8. The process according to any of claims 1 to 7 carried out at from 0 to 120°C.

9. The process according to any of the preceding claims, wherein the catalyst has been immobilized on a matrix.

10. A racemic mixture of at least one compound having the following formula (A'): 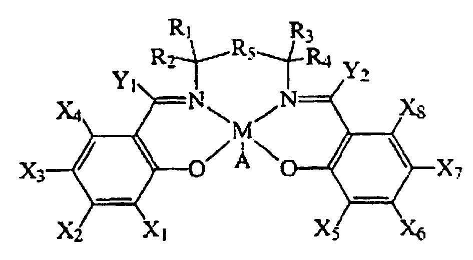
where
the substituents R₁, R₂, R₃, R₄, R₅, Y₁, Y₂, A and M are as defined in claim 5, X₂, X₄, X₆ and X₈ are each hydrogen and X₁, X₃, X₅ and X₇ are each, independently of one another, oligoisobutylene or polyisobutylene radicals which are each substituted by from 2 to 1000 isobutylene units.

11. A racemic mixture comprising at least one of the following compounds (A'3) or (A'4):

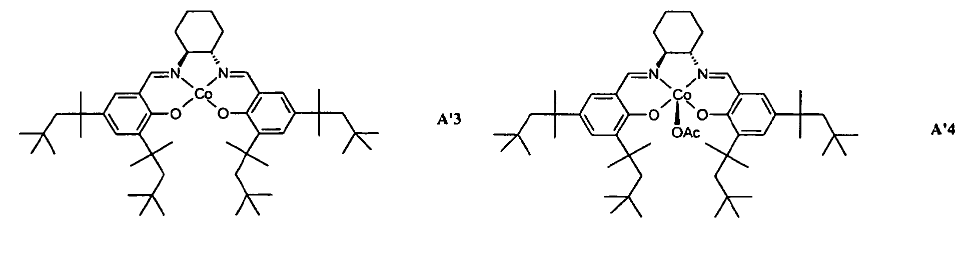

## Revendications

1. Procédé de préparation sélective de 1-méthoxy-2-propanol par réaction d'oxyde de propylène avec du méthanol, **caractérisé en ce que** la réaction est effectuée en présence d'un catalyseur racémique qui présente un ligand tétradentate asymétrique complexé avec un atome métallique, le complexe présentant une géométrie approximativement plane.

2. Procédé suivant la revendication 1, dans lequel le catalyseur présente la formule générale (A) suivante: 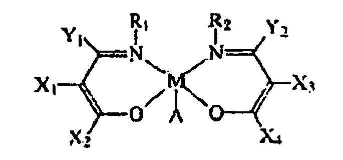
dans laquelle
les substituants R₁, R₂, Y₁, Y₂, X₁, X₂, X₃ et X₄ représentent, respectivement indépendamment l'un de l'autre, un des groupes ou atomes suivants : hydrogène, halogène, alkyle, alcényle, alcynyle, hydroxyle, amino, nitro, diol, amine, imine, amide, phosphoryle, phosphonate, phosphine, carbonyle, carboxyle, silyle, éther, thioéther, sulfonyle, sélénoéther, cétone, aldéhyde, ester et -(CH₂)ₘ-R₇, un ou plusieurs des substituants cités ci-dessus pouvant former conjointement un noyau carbocyclique ou hétérocyclique comportant 4 à 8 atomes dans le noyau,
à la condition que, pour la formation de β-iminocarbonyles comme ligands tétradentates, au moins un des R₁, Y₁, X₁ et X₂ soit lié de manière covalente sur au moins un des R₂, Y₂, X₃ et X₄,
au moins un des Y₁ et Y₂ étant de l'hydrogène,
R₇ représentant un groupe aryle, cycloalkyle, cycloalcényle, ou un groupe hétérocyclique ou polycyclique,
m étant un nombre entier de l'ordre de 0 à 8,
M représentant l'atome métallique,
A représentant un contre-ion ou un nucléophile, et
le catalyseur se présente sous la forme d'un mélange racémique.

3. Procédé suivant la revendication 1, dans lequel le catalyseur présente la formule générale (B) suivante : 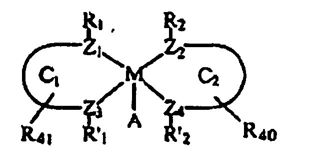
dans laquelle
Z₁, Z₂, Z₃ et Z₄ représentent chacun indépendamment l'un de l'autre une base de Lewis,
le radical C₁, considéré comme une combinaison de Z₁, Z₃ et M, ainsi que le radical C₂ considéré comme une combinaison de Z₂, Z₄ et M, forment respectivement indépendamment l'un de l'autre un hétérocycle,
R₁, R₂, R'₁ et R'₂, pris chacun indépendamment l'un de l'autre, font défaut ou représentent une substitution covalente avec un substituant organique ou inorganique, correspondant chaque fois à la valence de l'atome cédant des électrons sur lequel ils sont fixés,
R₄₀ et R₄₁, pris chacun indépendamment l'un de l'autre, font défaut, ou représentent une ou plusieurs substitutions covalentes de C₁ et C₂ par un substituant organique ou inorganique de la valence de l'atome du cycle sur lequel ils sont fixés, ou deux ou plusieurs des R₁, R₂, R'₁, R₄₀ et R₄₁ forment conjointement un substituant formant pont,
à la condition que C₁ soit substitué en au moins un endroit par R₁, R'₁ ou R₄₁ et que C₂ soit substitué en au moins un endroit par R₂, R'₂ ou R₄₀, et au moins un des R₁, R'₁ et R₄₁ formant conjointement avec au moins un des R₂, R'₂ et R₄₀ un substituant formant pont, Z₁, Z₂, Z₃ et Z₄ se présentant sous la forme d'un ligand tétradentate,
M représente un atome métallique,
A représente un contre-ion ou un nucléophile, et
le catalyseur se présente sous la forme d'un mélange racémique.

4. Procédé suivant la revendication 1, dans lequel le catalyseur présente la formule générale (C) suivante : 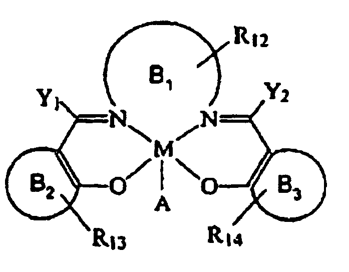
dans laquelle
le radical B₁ est un substituant formant pont du type diimine, représenté par -R₁₅-R₁₆-R₁₇, où R₁₅ et R₁₇, pris indépendamment l'un de l'autre, font défaut ou représentent un groupe alkyle, alcényle ou alcynyle et R₁₆ fait défaut ou représente un groupe ou atome amine, imine, amide, phosphoryle, carbonyle, silyle, oxygène, soufre, sulfonyle, sélénium ou ester,
B₂ et B₃ représentent chacun indépendamment l'un de l'autre des noyaux qui sont choisis parmi des noyaux cycloalkyle, cycloalcényle, aryle et hétérocycliques, les noyaux présentant 4 à 8 atomes dans le cycle,
Y₁ et Y₂ représentent chacun indépendamment l'un de l'autre des groupes ou atomes hydrogène, halogène, alkyle, alcényle, alcynyle, hydroxyle, amino, nitro, diol, amine, imine, amide, phosphoryle, phosphonate, phosphine, carbonyle, carboxyle, silyle, éther, thioéther, sulfonyle, sélénoéther, cétone, aldéhyde, ester ou -(CH₂)ₘ-R₇,
R₁₂, R₁₃ et R₁₄, pris indépendamment l'un de l'autre, font défaut ou représentent une ou plusieurs substitutions covalentes de B₁, B₂ et B₃ avec des groupes ou atomes halogène, alkyle, alcényle, alcynyle, hydroxyle, amino, nitro, diol, amine, imine, amide, phosphoryle, phosphonate, phosphine, carbonyle, carboxyle, silyle, éther, thioéther, sulfonyle, sélénoéther, cétone, aldéhyde, ester et - (CH₂)ₘ-R₇, R₁₂ pouvant apparaître en une ou plusieurs positions de R₁₅-R₁₆-R₁₇,
ou deux ou plusieurs des groupes R₁₂, R₁₃, R₁₄, Y₁ et Y₂ forment conjointement un substituant formant pont,
R₇ représente un groupe aryle, cycloalkyle, cycloalcényle ou un groupe hétérocyclique ou polycyclique,
m est un nombre entier de l'ordre de 0 à 8,
M représente l'atome métallique,
A représente un contre-ion ou un nucléophile, et
le catalyseur se présente sous la forme d'un mélange racémique.

5. Procédé suivant la revendication 1, dans lequel le catalyseur présente la formule générale (D) suivante : 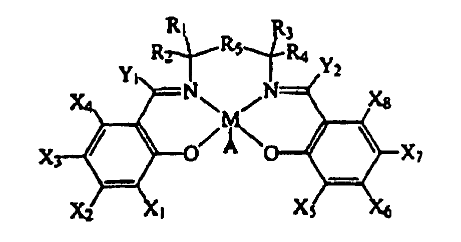
dans laquelle chacun des substituants R₁, R₂, R₃, R₄, R₅, Y₁, Y₂, X₁, X₂, X₃, X₄, X₅, X₆, X₇ et X₈ représentent indépendamment l'un de l'autre un groupe ou atome hydrogène, halogène, alkyle, alcényle, alcynyle, hydroxyle, amino, nitro, diol, amine, imine, amide, phosphoryle, phosphonate, phosphine, carbonyle, carboxyle, silyle, éther, thioéther, sulfonyle, sélénoéther, cétone, aldéhyde, ester et -(CH₂)ₘ-R₇,
ou deux ou plusieurs des substituants forment conjointement un carbocycle ou hétérocycle comportant 4 à 10 atomes dans le noyau,
R₇ représente un groupe aryle, cycloalkyle, cycloalcényle ou un groupe hétérocyclique ou polycyclique,
m est un nombre entier de l'ordre de 0 à 8,
M représente l'atome métallique,
A représente un contre-ion ou un nucléophile,
au moins un des R₁ et R₂ formant conjointement à au moins un des R₃ et R₄ un substituant formant pont, dans la mesure où R₅ fait défaut, et
le catalyseur se présentant sous la forme d'un mélange racémique.

6. Procédé suivant l'une des revendications 1 à 5, dans lequel le catalyseur se présente sous la forme d'un monomère ou d'un oligomère comportant 2 à 20 unités répétitives.

7. Procédé suivant l'une des revendications 1 à 6, **caractérisé en ce qu'**il est effectué dans un milieu liquide qui est différent de l'oxyde de propylène et du méthanol.

8. Procédé suivant l'une des revendications 1 à 7, **caractérisé en ce qu'**il est effectué à une température de l'ordre de 0 à 120°C.

9. Procédé suivant l'une des revendications précédentes, **caractérisé en ce que** le catalyseur se présente à l'état immobilisé sur une matrice.

10. Mélange racémique d'au moins un composé répondant à la formule générale (A') suivante : 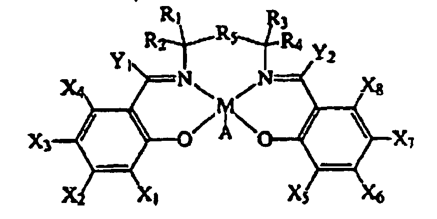
dans laquelle les substituants R₁, R₂, R₃, R₄, R₅, Y₁, Y₂, A et M sont tels que définis dans la revendication 5, X₂, X₄, X₆ et X₈ représentent de l'hydrogène et X₁, X₃, X₅ et X₇ représentent indépendamment l'un de l'autre des radicaux d'oligoisobutylène ou de polyisobutylène comportant chaque fois 2 à 1000 unités d'isobutylène.

11. Mélange racémique qui contient au moins un des composés suivants (A'3) ou (A'4) :
